# EUROPEAN PATENT APPLICATION

(11) **EP 1 895 217 A2**
(43) Date of publication of application: **05.03.2008**
(21) Application number: 07075714.1
(22) Date of filing: 22.08.2007
(51) Int. Cl.: F16K 31/04, F16K 31/54

(54) **Spring return worm gear drive actuator and method**

(30) Priority: 29.08.2006 US 511767
(71) Applicant: Delphi Technologies, Inc., Troy, Michigan 48007 (US)
(72) Inventor: Peffley, Thomas R., Penfield, NY 14526 (US); Reynolds, Rogers E., Rochester, NY 14623 (US)
(74) Representative: Denton, Michael John

(57) **Abstract**

A worm gear drive actuator having an output gear for controlling movement of a component between a default position and an activation position. The actuator includes a spring return connected to a return gear mounted in meshing engagement with a spur gear coaxially mounted to one end of the worm. As the worm is driven by a motor to rotate the output gear and thus the component to the activation direction, the spring turns and accumulates a torsional load. When the motor is deactivated, the spring releases its torsional load which rotates the return gear, spur gear, worm and output gear in the opposite direction which returns the component to its default position.

## Description

### TECHNICAL FIELD

The present invention relates to drive actuators, and more particularly to a spring return worm gear drive actuator and method useful in vehicle valve control applications, for example.

### BACKGROUND OF THE INVENTION

Worm gear type actuators are known and may be used to control valve movement in vehicle intake manifold systems. Worm gear actuators are desirable in that they self lock and cannot be back-fed under valve loading. This results in very stable valve movement which is important in the intake manifold application. A DC motor drives the worm which turns the worm output gear which connects to and rotates the valve to an activation position (for example, the valve may be normally closed and the activation position is the open position of the valve). To rotate the valve in the opposite (default) rotational position, an H-bridge controller is used to rotate the worm and thus the worm output gear in the opposite direction. This design has the drawback of being more costly due to the added electronics besides not working should the electronics fail.

Spring returns have been used to return the output gear to its default position but the spring return cannot be placed directly on the worm output gear since the worm output gear cannot turn the worm due to the high pitch angle of the worm. It is known that rotation of the worm output gear must therefore originate with the worm gear. One known spring return design is seen in U.S. Patent No. 6,276,664, however, the '664 system uses a drive system having large gear sets which cause the actuator housing to be equally large. It is known that vehicle operating components such as actuators should be as small as possible due to engine compartment space constraints of present day vehicle designs.

It would therefore be desirable to have a spring return worm gear drive actuator that does not require an H-bridge controller to return the component to its default position and which is compact.

### SUMMARY OF THE INVENTION

In an embodiment of the invention, a spring return worm gear drive actuator is provided having a worm gear in meshing engagement with an output gear that connects to and controls the movement of any desired component such as a valve blade, for example. A DC motor connects to one end of the worm gear and is operable to rotate the worm gear in a first, activation direction which in turn rotates the output gear to rotate the valve. In one embodiment, the valve may be in a normally closed (default) position and activation of the motor causes the worm gear and output gear to rotate in an activation rotational direction and move the valve to an open position. In an alternate embodiment, the valve may be in a normally open position and activation of the motor causes the worm gear and output gear to rotate in the activation rotational direction and move the valve to the closed position.

A spur gear is coaxially mounted to and rotates with the end of the worm gear opposite the motor connection. A return gear is mounted in meshing engagement with the spur gear such that rotation of the worm gear rotates the spur gear which rotates the return gear.

A return spring has a first end fixed to the return gear and is moveable therewith. A second, opposite end of the return spring is fixed relative to the return gear. As the return gear rotates in the activation direction, the return spring rotates and thereby accumulates a torsional load. Upon deactivation of the motor, the torsional load in the spring is released causing the return gear to rotate in the opposite rotational direction (the "default rotational direction") which thus also rotates the spur gear, worm gear and output gear in the same rotational direction which closes (or opens, depending on the embodiment) the valve blade (or other component) to its default position.

### BRIEF DESCRIPTION OF THE DRAWINGS

The present invention will now be described, by way of example, with reference to the accompanying drawings, in which:

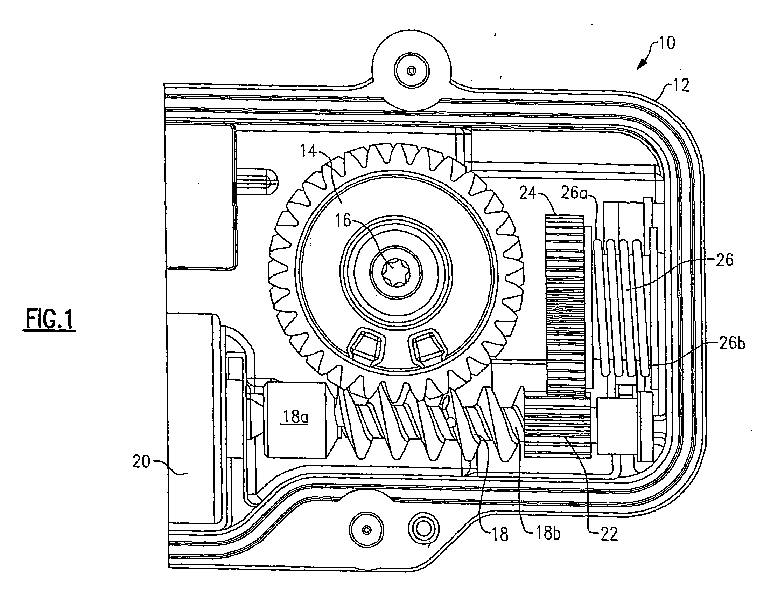

FIG. 1 is a plan view of a spring return drive actuator in accordance with an embodiment of the invention.

### DESCRIPTION OF THE PREFERRED EMBODIMENTS

Referring to FIG. 1, an electrically driven actuator 10 is seen having a housing 12 encasing the various components of the actuator 10. An output gear 14 is mounted in the housing 10 and includes an output shaft 16 for connecting to a component to be rotated such as a butterfly valve, for example (not shown). A worm gear 18 is mounted in housing 12 in meshing engagement with output gear 14. Worm gear 18 includes a first end 18a and second end 18b, the first end 18a adapted for connecting to an electric DC motor 20 for driving worm gear 18 in an activation rotational direction.

A spur gear 22 is coaxially connected to worm gear second end 18b and is rotatable with the worm gear 18. A return gear 24 is mounted in meshing engagement with spur gear 22. A return spring 26 has a first end 26a connected to and moveable with return gear 24 and a second end 26b which is fixed relative to the housing 10 and thus not movable with return spring 26. Upon activation of motor 20, motor 20 rotates worm gear 18 which in turn rotates spur gear 22 which in turn rotates return gear 24 which causes return spring 26 to turn and accumulate a torsional load. The tensioned return spring 26 biases return gear 24 in a default rotational direction opposite to the activation rotational direction. Upon deactivation of motor 20, return spring 26 releases its torsional load thereby rotating return gear 24, and thus also spur gear 22, worm gear 18 and output gear 14, in the default rotational direction.

The ratio between return gear 24 and spur gear 22 is relatively high to allow a relatively large rotational movement of the spur gear 22 and worm gear 18 with a relatively small rotational movement of the return gear 24. As such, spring 26 need only be turned a small amount to accumulate the torsional load necessary to move the gears and ultimately the valve blade to its default position. In one embodiment, the spur gear 22 may have a diameter approximately the same size as the diameter of the worm gear 18 while the return gear 24 has a diameter which is more than twice the diameter of the worm and spur gears.

While the invention has been described by reference to various specific embodiments, it should be understood that numerous changes may be made within the spirit and scope of the inventive concepts described. Accordingly, it is intended that the invention not be limited to the described embodiments, but will have the full scope as defined by the language of the following claims.

## Claims

1. An electrically driven actuator comprising:
a) an output gear;
b) a worm gear in meshing engagement with said output gear, said worm gear having first and second ends, said first end adapted for connecting to an electric motor for driving said worm gear in an activation rotational direction;
c) a spur gear coaxially connected to and rotatable with said worm gear second end;
d) a return gear in meshing engagement with said spur gear; and
e) a return spring having a first end connected to and moveable with said return gear and a second end which is fixed and not movable with said return spring, said return spring rotating and accumulating a torsional load upon said motor driving said worm gear in said activation rotational direction,
whereby said torsionally loaded return spring biases said return gear in a default rotational direction opposite to said activation rotational direction, said return gear thereby rotating said spur gear, said worm gear and said output gear in said default rotational direction.

2. The actuator of claim 1 wherein said spur gear has a diameter approximately equal to the diameter of said worm gear.

3. The actuator of claim 2 wherein said return gear has a diameter more than twice the diameter of said spur gear.

4. A method of controlling movement of a component between a default position and an activation position, said method comprising the steps of:
a) providing an output gear;
b) providing a worm gear in meshing engagement with said output gear, said worm gear having first and second ends, said first end adapted for connecting to an electric motor for driving said worm gear in an activation rotational direction which moves said component to said activation position;
c) providing a spur gear coaxially connected to and rotatable with said worm gear second end;
d) providing a return gear in meshing engagement with said spur gear; and
e) providing a return spring having a first end connected to and moveable with said return gear and a second end which is fixed and not movable with said return spring, said return spring rotating and accumulating a torsional load upon said motor driving said worm gear in said activation rotational direction,
whereby said torsionally loaded return spring biases said return gear in a default rotational direction opposite to said activation rotational direction, said return gear thereby rotating said spur gear, said worm gear and said output gear in said default rotational direction which moves said component to said default position.

5. The method of claim 4 wherein said spur gear has a diameter approximately equal to the diameter of said worm gear.

6. The method of claim 5 wherein said return gear has a diameter more than twice the diameter of said spur gear.
